# EUROPÄISCHE PATENTSCHRIFT

(11) **EP 0 557 682 B1**
(45) Veröffentlichungstag und Bekanntmachung des Hinweises auf die Patenterteilung: **25.08.1999**
(21) Anmeldenummer: 93100027.7
(22) Anmeldetag: 04.01.1993
(51) Int. Cl.: G06F 9/44, G06F 9/445, G06F 15/78

(54) **Verfahren und Anordnung zum Ändern eines Betriebsprogramms in einer programmgesteuerten Steuereinheit**
Method and apparatus to alter a control program stored in a program-controlled control unit
Procédé et dispositif pour modifier un programme de commande dans une unité de commande gérée par programme

(30) Priorität: 25.02.1992 DE 4205730
(43) Veröffentlichungstag der Anmeldung: 01.09.1993
(73) Patentinhaber: SIEMENS AKTIENGESELLSCHAFT, 80333 München (DE)
(72) Erfinder: Gerst, Martin, Dipl.-Ing., W-5840 Schwerte-Westhofen (DE); Chichoski, Reiner, Dipl.-Ing., W-4600 Dortmund 1 (DE)

(56) Entgegenhaltungen:
- EP-A- 0 464 433
- GB-A- 2 227 584
- PATENT ABSTRACTS OF JAPAN vol. 8, no. 179 (P-295)17. August 1984 & JP-A-59 071 180 (DAINIPPON INSATSU KK) 21. April 1984

## Beschreibung

Die Erfindung bezieht sich auf ein Verfahren und eine Anordnung zum Ändern eines Betriebsprogramms in einer programmgesteuerten Steuereinheit, insbesondere in einer Kommunikationsanlage, wie beispielsweise einer Vermittlungsanlage für den Fernsprech- und/oder Datenverkehr.

Moderne programmgesteuerte Kommunikationsanlagen enthalten üblicherweise eine Steuereinheit, die mit einem Rechnersystem versehen ist. Das Rechnersystem weist normalerweise einen oder mehrere Prozessoren und eine oder mehrere Speichereinheiten auf, die üblicherweise mindestens einen Programmspeicher und mindestens einen Datenspeicher enthalten. Der Programmspeicher kann als PROM ausgebildet sein, während der Datenspeicher als RAM ausgebildet sein kann, in dem die Daten flüchtig gespeichert sind, d.h. beim Entfernen der Versorgungsspannung werden die Daten zerstört. In dem Datenspeicher sind u.a. die einer spezifischen Kommunikationsanlage zugeordneten Kundendaten gespeichert, wie beispielsweise Rufnummern oder verschiedenen Rufnummern zugeordnete mögliche Leistungsmerkmale, wie z.B. "Automatischer Rückruf", "Kurzwahl" oder "Wahlwiederholung".

Aus EP 0 464 433 A2 ist eine derartige mikroprozessorgesteuerte Einrichtung mit einem Mikroprozessor, einem nichtflüchtigen Programmspeicher EPROM zur Speicherung von durch den Mikroprozessor auszuführenden Programmen und einem flüchtigen Datenspeicher RAM zur Speicherung von Daten zur Ausführung der Programme bekannt.

Falls in einer derartigen Vermittlungsanlage ein im Programmspeicher gespeichertes Betriebsprogramm durch eine neue oder andere Version ersetzt werden soll, werden z.B. die PROM-Bausteine ausgetauscht und durch solche mit dem neuen Betriebsprogramm ersetzt. Hierzu ist es erforderlich, die Versorgungsspannung abzutrennen und die entsprechenden Baugruppen zu ziehen. Mit dem Abtrennen der Versorgungsspannung werden jedoch auch die Kundendaten im RAM zerstört, wenn diese nicht durch eine Batterie gepuffert sind. Nach dem Austauschen der PROM-Bausteine wird das neue Betriebsprogramm wieder hochgefahren.

Das neue Betriebsprogramm kann im Datenspeicher eine neue Datenbasis mit anderen Strukturen erfordern. Beispielsweise werden die Grenzen derjenigen Bereiche verschoben, in denen verschiedenen Merkmalen zugeordnete Daten gespeichert sind. Es kann sich auch die Länge einzelner Datenstrukturen verändern, wenn sich beispielsweise die Anzahl der Ziffern der in der Kommunikationsanlage gespeicherten Kurzrufnummernziele erhöht, z.B. in den USA von 24 auf 30 Ziffern. Anschließend werden durch sogenannte betriebstechnische Aufträge (AMAs = Administration and Maintenance-Applications) die neuen Kundendaten eingerichtet.

Es ist möglich, vor der Änderung des Betriebsprogramms eine logische Kopie der ursprünglichen Kundendaten in Form von betriebstechnischen Aufträgen in einer Bedieneinheit der Anlage auf einer Festplatte oder einer Diskette anzufertigen und dann nach der Änderung diese Daten in einer anderen Struktur wieder in den Datenspeicher einzulesen. Hierzu ist jedoch ein großer zeitlicher Aufwand erforderlich, der sogar eine Zeitdauer von mehr als einer Stunde erfordern kann. Während dieser Zeit ist die Kommunikationsanlage nicht betriebsbereit.

Falls die Daten des Datenspeichers mit einer Batterie gepuffert werden, werden die Kundendaten beim Wechsel der PROM-Bausteine nicht zerstört. Falls sich jedoch mit dem Laden eines neuen Betriebsprogramms die Strukturen im Datenspeicher verändern, kann mit den ursprünglichen Daten nicht ohne weiteres weitergearbeitet werden.

Der Erfindung liegt daher die Aufgabe zugrunde, ein Verfahren und eine Anordnung anzugeben, bei deren Verwendung ein neues Betriebsprogramm in einer programmgesteuerten Steuereinheit auf einfache Weise und sehr schnell eingerichtet werden kann.

Erfindungsgemäß wird die Aufgabe bei dem Verfahren und der Anordnung der eingangs genannten Art durch die in den Patentansprüchen 1 bzw. 11 angegebenen Merkmale gelöst.

Vor dem Ändern des Betriebsprogramms werden die im Datenspeicher gespeicherten Daten zunächst gegen eine Zerstörung während der Änderung gesichert. Nachdem das bisherige Betriebsprogramm durch ein neues Betriebsprogramm ersetzt worden ist, überprüft das neue Betriebsprogramm, ob andere Strukturen der Daten erforderlich sind. Wenn dies der Fall ist, erzeugt das neue Betriebsprogramm durch Kopieren der bisherigen Daten im Datenspeicher und gegebenenfalls durch Ergänzen mit Ausgangswerten die Daten mit den neuen Strukturen.

Das Verfahren und die Anordnung haben den Vorteil, daß die Daten auf einfache Weise und sehr schnell in die neue Struktur umgesetzt und vollständig übernommen werden können und damit nicht erneut eingelesen werden müssen. Falls es die neuen Strukturen erfordern, werden fehlende Stellen durch die Ausgangswerte ergänzt. Die Anordnung ist damit sofort nach der Änderung wieder betriebsbereit.

Eine vorteilhafte Ausführungsform ergibt sich, wenn die Überprüfung, ob andere Strukturen der Daten erforderlich sind, während des Hochlaufs des neuen Betriebsprogramms erfolgt. Dabei ist es zweckmäßig, daß die Überprüfung, ob andere Strukturen erforderlich sind, durch Vergleichen der Strukturen der bisherigen Daten mit den Strukturen der neuen Daten erfolgt. Die Strukturen werden hierzu vorteilhafterweise im Datenspeicher und im Programmspeicher in entsprechenden Strukturverzeichnissen gespeichert.

Das Verfahren und die Anordnung eignen sich insbesondere dann, wenn das Ersetzen des bisherigen Betriebsprogramms durch das Austauschen des Programmspeichers erfolgt und/oder wenn die Daten im Datenspeicher durch Puffern desselben unter Verwendung einer Batterie gegen Zerstörung während der Änderung gesichert werden. Das neue Betriebsprogramm kann auch durch Einlesen von einem Datenträger geladen werden. Ebenso können die Daten im Datenspeicher auf einem Datenträger zwischengespeichert werden.

Falls der Datenspeicher vor dem Umkopieren nicht ausreicht, alle Daten aufzunehmen, so kann zusätzlich ein Speicher im Prozessor mitverwendet werden.

Das Verfahren und die Anordnung eignen sich insbesondere für Kommunikationsanlagen, da diese nach der Änderung des Betriebsprogramms sofort wieder betriebsbereit sind und die kundenspezifischen Daten nicht erneut eingelesen werden müssen.

Das Verfahren und ein Ausführungsbeispiel einer Anordnung zur Durchführung des Verfahrens werden im folgenden anhand von Zeichnungen näher erläutert. Es zeigen:
- Figur 1: ein Blockschaltbild einer mit einer programmgesteuerten Steuereinheit versehenen Kommunikationsanlage,
- Figur 2: ein Blockschaltbild der Steuereinheit, und
- Figur 3: eine schematische Darstellung von Speicherinhalten.

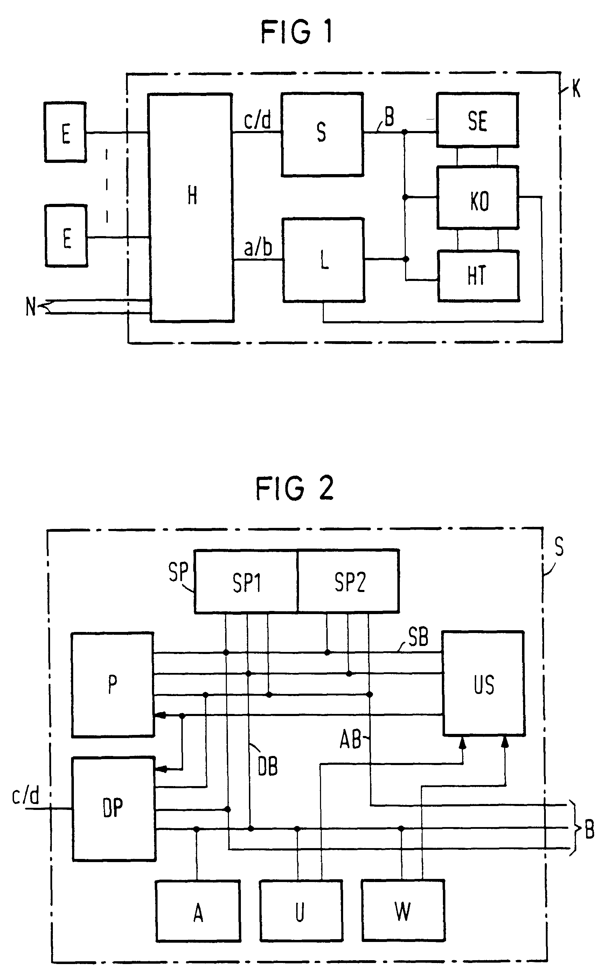

Die in Figur 1 dargestellte Kommunikationsanlage K enthält eine programmgesteuerte Steuereinheit S mit einem digitalen Rechnersystem. Die Steuereinheit S steuert und überwacht über Busse B die einzelnen Einheiten der Kommunikationsanlage K. Solche Einheiten sind ein Hauptverteiler H, der als Schnittstelleneinrichtung zu angeschlossenen Endgeräten E und zu Netzen N dient und eine Leitungseinheit L, die unterschiedliche Signalisierungsinformationen von den Endgeräten E oder den Netzen N auf ein innerhalb der Kommunikationsanlage K einheitliches Format umwandeln. Weitere Einheiten sind ein Hörtonerzeuger HT und ein MFV-Sender SE. Der Hörtonerzeuger HT erzeugt Hörtöne unterschiedlicher Frequenz und der MFV-Sender SE erzeugt die erforderlichen Signale bei einer Mehrfrequenzwahl in einem entsprechenden Netz N. Eine weitere wesentliche Einheit ist ein Koppelnetz KO, das die Verbindungen zwischen den Endgeräten E untereinander oder zwischen den Endgeräten E und den Netzen N durchschaltet. Das Koppelnetz KO besteht aus mehreren sogenannten Koppelvielfachen in Form von matrixartig angeordneten Zeilen-und Spaltenleitungen, wobei die Kreuzungspunkte als ein- und ausschaltbare Verbindungselemente ausgebildet sind.

Die in Figur 2 dargestellte Steuereinheit S enthält einen als Systemprozessor dienenden Prozessor P und eine als Systemspeicher dienende Speichereinheit SP. Der Prozessor P und die Speichereinheit SP sind miteinander über einen Datenbus DB, einen Adressenbus AB und einen Steuerbus SB verbunden. Die Speichereinheit SP enthält Halbleiterbausteine unterschiedlichen Speichertyps. Ein erster Speicher SP1 beinhaltet das Betriebsprogramm und ein zweiter Speicher SP2 dient als Daten- und Arbeitsspeicher. Der Speicher SP1 kann sowohl als NUR-LESE-SPEICHER (PROM) ausgebildet sein als auch als SCHREIB-LESE-SPEICHER (RAM), in den von einem Datenträger (Festplatte) der Kommunikationsanlage K das Betriebsprogramm BP geladen wird. Der Speicher SP2 ist in der Regel ein SCHREIB-LESE-SPEICHER (RAM).

Die Steuereinheit S enthält eine Unterbrechungssteuerung US für den Prozessor P und den Datenprozessor DP und mehrere Überwachungseinheiten, wie z.B. eine Uhr U, einen Watchdog W sowie eine Anzeigeeinheit A. Diese Einheiten sind über den Datenbus DB, den Adressenbus AB und/oder den Steuerbus SB mit dem Prozessor P verbunden.

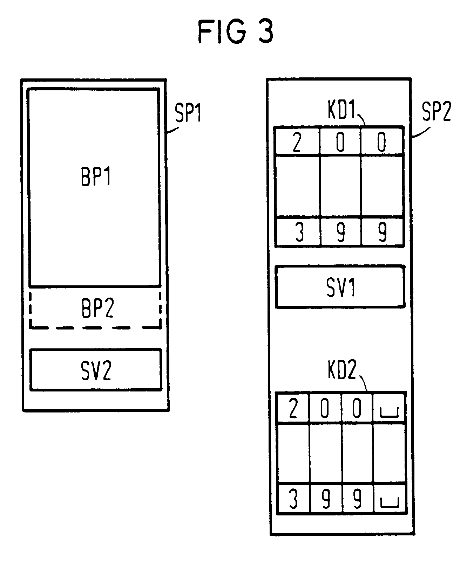

Die in Figur 3 schematisch dargestellten Speicherinhalte zeigen das im Speicher SP1 gespeicherte Betriebsprogramm BP und die im Speicher SP2 gespeicherten Kundendaten KD, die für verschiedene Kommunikationsanlagen K spezifisch sind. Sie umfassen z.B. die Rufnummern und die verschiedenen möglichen Leistungsmerkmale.

Im Laufe des Betriebes der Kommunikationsanlage K ist es möglich, daß das augenblickliche Betriebsprogramm BP1 auf einen neuen Stand gebracht werden soll, weil ein Kunde z.B. weitere, in einem Betriebsprogramm BP2 neu entwickelte, Leistungsmerkmale wünscht oder weil eine Fehlerkorrektur in dem Betriebssystem BP1 notwendig ist. Bei einer derartigen Änderung wird das Betriebsprogramm BP1 im Speicher SP1 durch eine neue Betriebsprogrammversion BP2 ersetzt. Hierzu wird entweder die Versorgungsspannung abgeschaltet und die Speicherbausteine für den Speicher SP1 getauscht oder das neue Betriebsprogramm BP2 wird bei eingeschalteter Versorgungsspannung von einem Datenträger in den Speicher SP1 geladen.

Entweder werden die zum Betriebsprogramm BP2 gehörigen Kundendaten KD1 durch Batterie-Pufferung des Speichers SP2 vor Zerstörung geschützt oder die Kundendaten KD1 werden von dem Datenträger in den Speicher SP2 geladen. Dazu müssen die Kundendaten KD vor dem Betriebsprogramm-Tausch als physikalische Speicher-Kopie des Speichers SP2 auf dem Datenträger gesichert werden.

Die Strukturen der neuen Daten im Speicher SP2 werden möglicherweise nach der Programmänderung verschieden sein von den ursprünglichen Strukturen, so daß beispielsweise die ursprünglichen Kundendaten KD1 nicht ohne weiteres für eine Verarbeitung durch ein neues Betriebsprogramm BP2 geeignet sind. Die Strukturen der Daten im Speicher SP2 sind in einem Strukturverzeichnis SV1 im Speicher SP2 gespeichert. Dieses Strukturverzeichnis SV1 enthält alle wichtigen Zugriffsdaten für die Datenbasis. Im Speicher SP1 sind mit dem Betriebsprogramm BP1 die Strukturen der zugehörigen Speicher-Daten in entsprechender Weise in einem Strukturverzeichnis SV2 gespeichert.

Wenn das im Speicher SP1 vorhandene Betriebsprogramm BP1 gegen das neue Betriebsprogramm BP2 ausgetauscht wird, sind die entsprechenden Strukturen im Strukturverzeichnis SV2 gespeichert. Falls die Strukturen für das neue Betriebsprogramm BP2 mit denjenigen des vorangehenden Betriebsprogramms BP1 übereinstimmen, können die bisherigen Kundendaten KD1 unverändert weiter benutzt werden. Falls jedoch bei dem neuen Betriebsprogramm BP2 andere, z.B. erweiterte Strukturen erforderlich sind, können die Kundendaten KD1 nicht ohne weiteres durch das neue Betriebsprogramm BP2 verarbeitet werden. Beim Hochlaufen des neuen Betriebsprogramms BP2 prüft dieses daher, ob sich die Strukturen verändert haben. Dies erfolgt durch Vergleich der Inhalte der Strukturverzeichnisse SV1 und SV2. Wenn die Strukturen ungleich sind, werden die neuen Strukturen in das Strukturverzeichnis SV2 eingespeichert. Dann kopiert das Betriebsprogramm BP2 die bisherigen Kundendaten KD1 aus den alten Strukturen in die neuen Strukturen um. Die zusätzlichen Elemente in den neuen Strukturen werden dabei unberücksichtigt gelassen oder durch Ausgangswerte (Default-Daten) ausgefüllt. Nach dem Umkopieren werden dann die Zugriffsdaten im Strukturverzeichnis SV1 auf den neuesten Stand gebracht. Danach werden die Speicherbereiche, die die bisherigen Kundendaten KD1 enthielten, zum Überschreiben oder Löschen freigegeben.

Falls im Speicher SP2 kein ausreichender Speicherplatz vorhanden ist, um vor dem Umkopieren die bisherigen und die neuen Kundendaten KD1 bzw. KD2 zu speichern, kann auch auf einen weiteren Speicher im Prozessor P temporär zurückgegriffen werden. Nach dem Umkopieren der alten Kundendaten KD1 kann dieser weitere Speicher dann wieder freigemacht werden.

Zur Veranschaulichung sei vereinfacht angenommen, daß im Speicher SP2 als anwenderspezifische Kundendaten KD1 nur interne Kurzrufnummern 200 bis 399 gespeichert sind und der Kunde seine Kommunikationsanlage K auf externe vierstellige (Amts)-Kurzrufnummern erweitern will. Beim Hochfahren des neuen Betriebsprogramms BP2 stellt dieses durch Vergleich fest, daß die in den Strukturverzeichnissen SV1 und SV2 gespeicherten Strukturen nicht übereinstimmen. Im Speicher SP2 müssen daher die neuen Kundendaten in der dem neuen Betriebsprogramm BP2 zugeordneten neuen Struktur angelegt werden. In diesem Fall bedeutet dies zumindest eine Abspeicherung der neuen Rufnummern in einem Bereich, der um eine Stelle erweitert ist. Die zuvor gesicherten Kundendaten KD1 mit den alten Rufnummern werden als Kundendaten KD2 in einen Bereich des Speichers SP2 umkopiert, der entsprechend den neuen Strukturen angelegt ist. In die durch die Erweiterung von der dreistelligen auf eine vierstellige Rufnummer zur Verfügung stehenden freien Stellen werden die Ausgangswerte Leerzeichen (Ungültig-Werte) eingetragen. Dann werden die neuen Strukturen im Strukturverzeichnis SV2 gespeichert. Anschließend wird der Speicherbereich mit den bisherigen Kundendaten KD1 freigegeben.

Durch die beschriebene Behandlung der Kundendaten KD ist sichergestellt, daß diese bei der Änderung nicht zerstört werden. Die Kommunikationsanlage K ist somit nach dem Hochfahren des neuen Betriebsprogramms BP2, bei dem auch das Umkopieren erfolgt, sofort wieder betriebsbereit. Damit entfällt der zeitaufwendige Vorgang, vor dem Laden des neuen Betriebsprogramms BP2 die Kundendaten KD in Form von betriebstechnischen Aufträgen z.B. auf einer Festplatte eines Betriebsterminals zwischenzuspeichern und nach dem Hochfahren des Betriebsprogramms BP2 wieder in den Speicher SP2 einzuspeichern.

## Patentansprüche

1. Verfahren zum Ändern eines Betriebsprogramms (BP) und zugehöriger Daten (KD) in einer programmgesteuerten Steuereinheit (S), die ein Rechnersystem mit einem Prozessor (P), mit einem Programmspeicher (SP1) und mit einem Datenspeicher (SP2) enthält, mit folgenden Schritten:
a) die im Datenspeicher (SP2) gespeicherten Daten (KD1) werden gegen Zerstörung während der Änderung des Betriebsprogramms (BP) gesichert,
b) das bisherige Betriebsprogramm (BP1) wird durch ein neues Betriebsprogramm (BP2) ersetzt,
(c) das neue Betriebsprogramm (BP2) überprüft, ob andere Strukturen der Daten (KD) erforderlich sind und
(d) falls andere Strukturen erforderlich sind, erzeugt das neue Betriebsprogramm (BP2) neue Daten (KD2) durch Übertragen der bisherigen Daten (KD1) und gegebenenfalls durch Ergänzen mit Ausgangswerten.

2. Verfahren nach Anspruch 1, wobei die Überprüfung, ob andere Strukturen der Daten (KD) erforderlich sind, während des Hochlaufs des neuen Betriebsprogramms (BP2) erfolgt.

3. Verfahren nach Anspruch 1 oder 2, wobei die Überprüfung, ob andere Strukturen der Daten (KD) erforderlich sind, durch Vergleichen der Strukturen der bisherigen Daten (KD1) mit den Strukturen der neuen Daten (KD2) erfolgt.

4. Verfahren nach Anspruch 3, wobei die Überprüfung durch das Vergleichen von im Datenspeicher (SP2) und im Programmspeicher (SP1) gespeicherten Strukturverzeichnissen (SV1, SV2) erfolgt.

5. Verfahren nach einem der Ansprüche 1 bis 4, wobei das Ersetzen des bisherigen Betriebsprogramms (BP1) durch das Austauschen des Programmspeichers (SP1) erfolgt.

6. Verfahren nach einem der Ansprüche 1 bis 4, wobei das Ersetzen des bisherigen Betriebsprogramms (BPI) durch Laden von einem Datenträger erfolgt.

7. Verfahren nach einem der Ansprüche 1 bis 6, wobei die Daten (KD1) durch Puffern des Datenspeichers (SP2) unter Verwendung einer Batterie gegen Zerstörung gesichert werden.

8. Verfahren nach einem der Ansprüche 1 bis 6, wobei die Daten (KD) als physikalischer Speicherabzug auf einem Datenträger gesichert und wieder in den Datenspeicher (SP2) geladen werden.

9. Verfahren nach einem der Ansprüche 1 bis 8, wobei die bisherigen Daten (KD1) nach dem Erzeugen der neuen Daten (KD2) freigegeben und gelöscht werden.

10. Verfahren nach einem der Ansprüche 1 bis 9, wobei das Erzeugen der neuen Daten (KD2) unter Verwendung eines Speichers des Prozessors (P) erfolgt.

11. Anordnung zum Ändern eines Betriebsprogramms (BP) und zugehöriger Daten (KD) in einer programmgesteuerten Steuereinheit (S), die ein Rechnersystem mit einem Prozessor (P) und einer mit diesem verbundenen Speichereinheit enthält, die einen Programmspeicher (SP1) und einen Datenspeicher (SP2) umfaßt, **dadurch gekennzeichnet**, daß der Datenspeicher (SP2) derart ausgebildet ist, daß die gespeicherten Daten (KD1) während der Änderung des Betriebsprogramms (BP) vor einer Zerstörung gesichert sind, und daß Mittel (P, BP) vorgesehen sind, die überprüfen, ob andere Strukturen der Daten (KD) durch die Änderung des Betriebsprogramms (BP) erforderlich sind und die neue Daten (KD2) unter Übertragen der bisherigen Daten (KD1) und gegebenenfalls durch Ergänzen mit Ausgangswerten erzeugen.

12. Anordnung nach Anspruch 11, **dadurch gekennzeichnet**, daß der Datenspeicher (SP2) eine Batterie zum Sichern der Daten (KD) gegen Zerstörung bei fehlender Versorgungsspannung enthält.

13. Anordnung nach Anspruch 11 oder 12, **dadurch gekennzeichnet**, daß ein Datenträger vorgesehen ist, auf dem die Daten (KD) zwischenspeicherbar sind.

14. Anordnung nach einem der Ansprüche 11 bis 13, **dadurch gekennzeichnet**, daß der Programmspeicher (SP1) und der Datenspeicher (SP2) Bereiche aufweisen, in denen Strukturverzeichnisse (SV1, SV2) gespeichert sind.

15. Anordnung nach einem der Ansprüche 11 bis 14, **dadurch gekennzeichnet**, daß der Programmspeicher (SP1) austauschbar ausgebildet ist.

16. Anordnung nach einem der Ansprüche 11 bis 14, **dadurch gekennzeichnet**, daß ein Datenträger vorgesehen ist, von dem das geänderte Betriebsprogramm (BP) ladbar ist.

17. Anordnung nach einem der Ansprüche 11 bis 16, **dadurch gekennzeichnet**, daß der Programmspeicher (SP1) und der Datenspeicher (SP2) Bestandteile einer Kommunikationsanlage (K) sind.

## Claims

1. Method for editing an operating program (BP) and associated data (KD) in a programmable control unit (S) which contains a computer system having a processor (P), having a program memory (SP1) and having a data memory (SP2), with the following steps:
a) the data (KD1) stored in the data memory (SP2) are protected against destruction while the operating program (BP) is being edited,
b) the previous operating program (BP1) is replaced by a new operating program (BP2),
c) the new operating program (BP2) checks whether any different structures are required for the data (KD) and
d) if different structures are required, the new operating program (BP2) produces new data (KD2) by transmitting the previous data (KD1) and, if required, by adding initial values.

2. Method according to Claim 1, wherein the check to determine whether different structures are required for the data (KD) is carried out while the new operating program (BP2) is being started up.

3. Method according to Claim 1 or 2, wherein the check to determine whether different structures are required for the data (KD) is carried out by comparing the structures of the previous data (KD1) with the structures of the new data (KD2).

4. Method according to Claim 3, wherein the check is carried out by comparing structure directories (SV1, SV2) which are stored in the data memory (SP2) and in the program memory (SP1).

5. Method according to one of Claims 1 to 4, wherein the previous operating program (BP1) is replaced by changing the program memory (SP1).

6. Method according to one of Claims 1 to 4, wherein the previous operating program (BP1) is replaced by loading from a data medium.

7. Method according to one of Claims 1 to 6, wherein the data (KD1) are protected against destruction by buffering the data memory (SP2) using a battery.

8. Method according to one of Claims 1 to 6, wherein the data (KD) are protected as a physical memory extract on a data medium, and are loaded into the data memory (SP2) again.

9. Method according to one of Claims 1 to 8, wherein the previous data (KD1) are released and deleted after the production of the new data (KD2).

10. Method according to one of Claims 1 to 9, wherein the new data (KD2) are produced using a memory in the processor (P).

11. Arrangement for editing an operating program (BP) and associated data (KD) in a programmable control unit (S) which contains a computer system having a processor (P) and having a memory unit which is connected to this processor (P) and comprises a program memory (SP1) and a data memory (SP2), characterized in that the data memory (SP2) is designed in such a manner that the stored data (KD1) are protected against destruction while the operating program (BP) is being edited, and in that means (P, BP) are provided which check whether different structures are required for the data (KD) as a result of the editing of the operating program (BP), and produce the new data (KD2) with the previous data (KD1) being transmitted and, if required, by adding initial values.

12. Arrangement according to Claim 11, characterized in that the data memory (SP2) contains a battery in order to protect the data (KD) against destruction when there is no supply voltage.

13. Arrangement according to Claim 11 or 12, characterized in that a data medium is provided, on which the data (KD) can be temporarily stored.

14. Arrangement according to one of Claims 11 to 13, characterized in that the program memory (SP1) and the data memory (SP2) have areas in which structure directories (SV1, SV2) are stored.

15. Arrangement according to one of Claims 11 to 14, characterized in that the program memory (SP1) is designed to be replaceable.

16. Arrangement according to one of Claims 11 to 14, characterized in that a data medium is provided, from which the edited operating program (BP) can be loaded.

17. Arrangement according to one of Claims 11 to 16, characterized in that the program memory (SP1) and the data memory (SP2) are parts of a communications system (K).

## Revendications

1. Procédé de modification d'un programme d'exploitation (BP) et de données associées (KD) dans une unité de commande (S) commandée par programme et contenant un système à ordinateurs ayant un processeur (P), une mémoire de programmes (SP1) et une mémoire de données (SP2), comportant les étapes suivantes :
a) on protège les données (KD1) mémorisées dans la mémoire de données (SP2) de toute destruction pendant la modification du programme d'exploitation (BP),
b) on remplace le programme d'exploitation (BP1) utilisé jusqu'alors par un nouveau programme d'exploitation (BP2),
c) le nouveau programme d'exploitation (BP2) contrôle si d'autres structures des données (KD) sont nécessaires, et
d) si d'autres structures sont nécessaires, le nouveau programme d'exploitation (BP2) produit de nouvelles données (KD2) en transférant les données (KD1) utilisées jusqu'alors et éventuellement en les complétant par des valeurs initiales.

2. Procédé selon la revendication 1, dans lequel le contrôle pour savoir si d'autres structures des données (KD) sont nécessaires s'effectue pendant le démarrage du nouveau programme d'exploitation (BP2).

3. Procédé selon la revendication 1 ou 2, dans lequel le contrôle pour savoir si d'autres structures des données (KD) sont nécessaires s'effectue en comparant les structures des données (KD1) utilisées jusqu'alors aux structures des nouvelles données (KD2).

4. Procédé selon la revendication 3, dans lequel le contrôle s'effectue en comparant des descriptions de structures (SV1, SV2) mémorisées dans la mémoire de données (SP2) et dans la mémoire de programmes (SP1).

5. Procédé selon l'une des revendications 1 à 4, dans lequel le remplacement du programme d'exploitation (BP1) utilisé jusqu'alors s'effectue au moyen d'un échange de la mémoire de programmes (SP1).

6. Procédé selon l'une des revendications 1 à 4, dans lequel le remplacement du programme d'exploitation (BP1) utilisé jusqu'alors s'effectue au moyen d'un chargement depuis un support de données.

7. Procédé selon l'une des revendications 1 à 6, dans lequel on protège de toute destruction les données (KD1), en mettant en mémoire tampon la mémoire de données (SP2) et en utilisant une pile.

8. Procédé selon l'une des revendications 1 à 6, dans lequel on protège les données (KD) au moyen d'un vidage de mémoire physique sur un support de données et on les recharge dans la mémoire de données (SP2).

9. Procédé selon l'une des revendications 1 à 8, dans lequel, après la production des nouvelles données (KD2), on libère et on efface les données (KD1) utilisées jusqu'alors.

10. Procédé selon l'une des revendications 1 à 9, dans lequel la production des nouvelles données (KD2) s'effectue en utilisant une mémoire du processeur (P).

11. Dispositif pour la modification d'un programme d'exploitation (BP) et de données associées (KD) dans une unité de commande (S) commandée par programme et contenant un système à ordinateurs ayant un processeur (P) et une unité de mémoire, qui est reliée à celui-ci et qui comprend une mémoire de programmes (SP1) et une mémoire de données (SP2), caractérisé par le fait que la mémoire de données (SP2) est conçue de telle sorte que les données mémorisées (KD1) sont protégées de toute destruction pendant la modification du programme d'exploitation (BP) et il est prévu des moyens (P, BP) qui contrôlent si d'autres structures des données (KD) sont nécessaires à cause de la modification du programme d'exploitation (BP) et les nouvelles données (KD2) sont produites en transférant les données (KD1) utilisées jusqu'alors et éventuellement en les complétant par des valeurs initiales.

12. Dispositif selon la revendication 11, caractérisé par le fait que la mémoire de données (SP2) comporte une pile pour protéger les données (KD) de toute destruction en cas de coupure de la tension d'alimentation.

13. Dispositif selon la revendication 11 ou 12, caractérisé par le fait qu'il est prévu un support de données sur lequel les données (KD) peuvent être mémorisées temporairement.

14. Dispositif selon l'une des revendications 11 à 13, caractérisé par le fait que la mémoire de programmes (SP1) et la mémoire de données (SP2) comportent des zones dans lesquelles des descriptions de structures (SV1, SV2) sont mémorisées.

15. Dispositif selon l'une des revendications 11 à 14, caractérisé par le fait que la mémoire de programmes (SP1) est conçue de manière à pouvoir être échangée.

16. Dispositif selon l'une des revendications 11 à 14, caractérisé par le fait qu'il est prévu un support de données, depuis lequel le programme d'exploitation modifié (BP) peut être chargé.

17. Dispositif selon l'une des revendications 11 à 16, caractérisé par le fait que la mémoire de programmes (SP1) et la mémoire de données (SP2) font partie d'une installation de communication (K).
